(19) Europäisches Patentamt
European Patent Office
Office européen des brevets

(11) **EP 4 117 825 B1**

(12) **EUROPÄISCHE PATENTSCHRIFT**

(45) Veröffentlichungstag und Bekanntmachung des Hinweises auf die Patenterteilung:
**18.06.2025   Patentblatt 2025/25**

(21) Anmeldenummer: **21711496.6**

(22) Anmeldetag: **08.03.2021**

(51) Internationale Patentklassifikation (IPC):
**B05B 1/16** *(2006.01)*     **B05B 12/06** *(2006.01)*
**A01B 79/02** *(2006.01)*

(52) Gemeinsame Patentklassifikation (CPC):
**A01M 7/0089; B05B 1/3053; F16K 31/0658;**
**F16K 31/0675; H01F 7/1805; H01F 7/1844;**
B05B 12/04; H01F 2007/185; H01F 2007/1888

(86) Internationale Anmeldenummer:
**PCT/EP2021/055723**

(87) Internationale Veröffentlichungsnummer:
**WO 2021/180618 (16.09.2021 Gazette 2021/37)**

(54) **VERFAHREN ZUM ANSTEUERN EINES MAGNETVENTILS**

METHOD FOR CONTROLLING A SOLENOID VALVE

PROCÉDÉ DE COMMANDE D'UNE ÉLECTROVANNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.03.2020   DE 102020106883**

(43) Veröffentlichungstag der Anmeldung:
**18.01.2023   Patentblatt 2023/03**

(73) Patentinhaber: **Amazonen-Werke H. Dreyer SE & Co. KG**
**49205 Hasbergen (DE)**

(72) Erfinder: **TRENTMANN, Markus**
**49134 Wallenhorst (DE)**

(56) Entgegenhaltungen:
WO-A1-2017/196669     US-A1- 2011 183 277
US-A1- 2012 228 395     US-A1- 2019 321 844

## Beschreibung

Die Erfindung betrifft ein Verfahren zum Ansteuern eines Magnetventils nach dem Oberbegriff des Patentanspruchs 1, ein Ventilsystem für ein landwirtschaftliches Spritzgerät nach dem Oberbegriff des Patentanspruchs 6 und ein landwirtschaftliches Spritzgerät nach dem Oberbegriff des Patentanspruchs 10.

Bei der Bestromung von Magnetventilen eines landwirtschaftlichen Spritzgeräts wird zum Öffnen des Magnetventils zunächst ein Einschaltstrom in das Magnetventil eingeprägt, sodass sich der Anker des Magnetventils von einer Sperrstellung in eine Freigabestellung bewegt. Nachdem der Anker die Freigabestellung eingenommen hat, wird ein Haltestrom in das Magnetventil eingeprägt, über welchen der Anker in der Freigabestellung gehalten wird, sodass das Magnetventil den geöffneten Zustand für eine beabsichtigte Öffnungsdauer beibehält. US 2019 0 321 844 A1, US 2012 0 228 395 A1 sowie US 2011 0 183 277 A1 zeigen derartige Ausführungsformen.

Bei den in der Praxis eingesetzten Verfahren zur Ansteuerung von Magnetventilen von landwirtschaftlichen Spritzgeräten ist zu beobachten, dass die Einprägung des Einschaltstroms fortgesetzt wird, obwohl der Anker bereits die Freigabestellung eingenommen und das Magnetventil somit bereits vollständig geöffnet wurde. Da der Einschaltstrom zum Bewegen des Ankers wesentlich höher ist als der zum Halten des Ankers in der Freigabestellung erforderliche Haltestrom wird bei den bekannten Ansteuerungsverfahren während des Einprägens des Einschaltstroms eine beträchtliche Energiemenge ungenutzt in Wärmeenergie umgewandelt.

Dadurch, dass die Einprägung des Einschaltstroms fortgesetzt wird, nachdem der Anker die Freigabestellung eingenommen hat, steigt auch der durch das Magnetventil fließende Strom weiter an, obwohl dies zur ordnungsgemäßen Schaltung des Magnetventils nicht erforderlich ist. Das elektrische System des landwirtschaftlichen Spritzgeräts ist im Hinblick auf die an den Magnetventilen auftretenden Stromhöchstwerte auszulegen. Eine unnötig lange Einprägung des Einschaltstroms führt folglich auch zu einer unnötig hohen Belastung des stromführenden Systems des landwirtschaftlichen Spritzgeräts. Damit das stromführende System des landwirtschaftlichen Spritzgeräts entsprechende Belastungen beschädigungsfrei aufnehmen kann, ist dieses robust gegen hohe Stromstärken auszulegen, wodurch die Material- und Herstellungskosten erheblich gesteigert werden.

Die der Erfindung zugrundeliegende Aufgabe besteht somit darin, eine energieeffiziente und systemschonende Ansteuerung von Magnetventilen eines landwirtschaftlichen Spritzgeräts zu ermöglichen.

Die Aufgabe wird gelöst durch ein Verfahren nach Anspruch 1.

Dadurch, dass die Einprägung des Haltestroms in Abhängigkeit des durch das Magnetventil fließenden Stroms veranlasst wird, wird das Einschaltverhalten des Magnetventils bei der Umschaltung der Stromeinprägung berücksichtigt. Insbesondere ist der Zeitpunkt, an welchem die Einprägung des Einschaltstroms in das Magnetventil beendet bzw. unterbrochen wird, von dem durch das Magnetventil fließenden Strom abhängig. Vorzugsweise ist der Zeitpunkt, an welchem das Einprägen des Haltestroms in das Magnetventil begonnen wird, von dem durch das Magnetventil fließenden Strom abhängig. Durch das Anpassen der Stromeinprägung in Abhängigkeit des Einschaltverhaltens des Magnetventils werden die an dem Magnetventil auftretenden Stromhöchstwerte erheblich reduziert und ein übermäßig hoher Spitzenstrom am Magnetventil wird vermieden. Das stromführende System des Spritzgeräts wird somit beim Öffnen des Magnetventils geringer belastet. Wenn mehrere Magnetventile mit dem Verfahren gleichzeitig oder zeitversetzt angesteuert werden, werden während des Betriebs des Spritzgeräts außerdem übermäßig hohe Summenströme vermieden. Wenn sämtliche Magnetventile des Spritzgeräts mit dem Verfahren angesteuert werden, kann durch die Optimierung der Verlustleistung eine erhebliche Energiemenge im Betrieb des Spritzgeräts eingespart und das stromführende System des Spritzgeräts deutlich entlastet werden. Bei der Optimierung der Verlustleistung wird lediglich ein Energieanteil eingespart, welcher bei den bekannten Ansteuerverfahren in Wärme umgesetzt wird. Die Energieeinsparung hat somit keinen Einfluss auf das Öffnungsverhalten des Magnetventils oder das Bewegungsverhalten des Ankers. Der Anker kann ein Magnetanker sein.

In der Sperrstellung des Ankers ist der Durchfluss von Flüssigkeit durch das Magnetventil gesperrt. In der Freigabestellung des Ankers ist der Durchfluss von Flüssigkeit durch das Magnetventil freigegeben. Das Einprägen des Haltestroms in Abhängigkeit des durch das Magnetventil fließenden Stroms wird vorzugsweise durch eine Steuerungseinrichtung des landwirtschaftlichen Spritzgeräts veranlasst.

In einer bevorzugten Ausführungsform des erfindungsgemäßen Verfahrens wird zum Einprägen des Einschaltstroms in das Magnetventil eine Einschaltspannung an eine Magnetspule des Magnetventils angelegt. Vorzugsweise wird zum Einprägen des Haltestroms in das Magnetventil eine Haltespannung an die Magnetspule des Magnetventils angelegt. Die Einschaltspannung und/oder die Haltespannung können pulsweitenmoduliert sein. Ferner kann die Einschaltspannung und/oder die Haltespannung ein konstanter, nicht modulierter Spannungswert sein.

In dem erfindungsgemäßen Verfahren erfolgt ein Ermitteln eines Umschaltzeitpunkts, zu welchem das Einprägen des Einschaltstroms unterbrochen und/oder das Einprägen des Haltestroms veranlasst wird. Das Einprägen des Haltestroms kann unmittelbar auf die Unterbrechung der Einschaltstromeinprägung folgen. Alternativ kann nach der Unterbrechung der Einschaltstromeinprägung eine Einprägepause erfolgen, während welcher keine Stromeinprägung erfolgt. Über die Einprägepause kann ein schneller Stromabfall auf das Niveau des Haltestroms am Magnetventil umgesetzt werden. Das Ermitteln des Umschaltzeitpunkts erfolgt vorzugsweise in Abhängigkeit des durch das Magnetventil fließenden Stroms. Der Umschaltzeitpunkt wird vorzugsweise durch eine Steuerungseinrichtung des landwirtschaftlichen Spritzgeräts ermittelt.

In einer Weiterbildung des erfindungsgemäßen Verfahrens wird zum Ermitteln des Umschaltzeitpunkts der durch das Magnetventil fließende Strom ermittelt. Insbesondere wird zum Ermitteln des Umschaltzeitpunkts die zeitliche Entwicklung des durch das Magnetventil fließenden Stroms untersucht. Das Untersuchen der zeitlichen Entwicklung des durch das Magnetventil fließenden Stroms wird vorzugsweise von einer Steuerungseinrichtung des landwirtschaftlichen Spritzgeräts ausgeführt. Durch das Untersuchen der zeitlichen Entwicklung des durch das Magnetventil fließenden Stroms kann der Ventilzustand und/oder die Position des Ankers ermittelt werden. Somit kann der in das Magnetventil eingeprägte Strom in Abhängigkeit des Ventilzustands bzw. in Abhängigkeit der Position des Ankers gesteuert werden.

In dem erfindungsgemäßen Verfahren wird zum Ermitteln des Umschaltzeitpunkts eine spezifische Änderung in der zeitlichen Entwicklung des durch das Magnetventil fließenden Stroms erfasst, währenddessen der Einschaltstrom in das Magnetventil eingeprägt wird. Die spezifische Änderung in der zeitlichen Entwicklung des durch das Magnetventil fließenden Stroms kann ein Wendepunkt im Stromverlauf, eine spezifische Krümmung im Stromverlauf oder ein lokales Extremum, insbesondere ein Minimum oder Maximum im Stromverlauf, sein. Die spezifische Änderung in der zeitlichen Entwicklung des durch das Magnetventil fließenden Stroms kann eine Unterbrechung eines Stromanstiegs oder eine Unterbrechung eines Stromabfalls sein. Wenn die spezifische Änderung in der zeitlichen Entwicklung des durch das Magnetventil fließenden Stroms erfasst wird, befindet sich der Anker vorzugsweise in einer Endlage und/oder der Anker prallt auf eine Anschlagsfläche des Magnetventils. Durch die Lageänderung des Ankers ändert sich die Induktivität der Magnetspule. Die Induktivitätsänderung wirkt sich auf die Lagekurve des Magnetventils aus. Somit kann durch Erfassen einer spezifischen Änderung in der zeitlichen Entwicklung des durch das Magnetventil fließenden Stroms eine spezifische Ankerposition identifiziert werden. In der Endlage des Ankers oder ab dem Aufprall des Ankers auf die Anschlagsfläche kann die Einschaltphase, in welcher der Einschaltstrom eingeprägt wird, beendet werden. In der Endlage des Ankers oder ab dem Aufprall des Ankers auf die Anschlagsfläche kann außerdem die Haltephase, in welcher der Haltestrom eingeprägt wird, gestartet werden.

In einer Weiterbildung des erfindungsgemäßen Verfahrens entspricht der Umschaltzeitpunkt dem Erfassungszeitpunkt der spezifischen Änderung in der zeitlichen Entwicklung des durch das Magnetventil fließenden Stroms. Alternativ wird der Umschaltzeitpunkt ausgehend von dem Erfassungszeitpunkt der spezifischen Änderung in der zeitlichen Entwicklung des durch das Magnetventil fließenden Stroms berechnet. Wenn der Umschaltzeitpunkt ausgehend von dem Erfassungszeitpunkt der spezifischen Änderung in der zeitlichen Entwicklung des durch das Magnetventil fließenden Stroms berechnet wird, kann das Einprägen des Einschaltstroms nach dem Erfassen der spezifischen Änderung in der zeitlichen Entwicklung des durch das Magnetventil fließenden Stroms für eine Sicherheitszeitdauer fortgesetzt werden, damit sichergestellt wird, dass das Magnetventil vollständig geöffnet ist, bevor der niedrigere Haltestrom eingeprägt wird. Durch die Fortsetzung der Einschaltstromeinprägung über die Sicherheitszeitdauer wird folglich ein Offset bei der Stromeinprägung berücksichtigt. Ferner kann nach dem Erfassen der spezifischen Änderung in der zeitlichen Entwicklung des durch das Magnetventil fließenden Stroms eine Einprägepause berücksichtigt werden, in welcher kein Strom in das Magnetventil eingeprägt wird. Über das Offset und/oder die Einprägepause kann eine auf die Bewegungseigenschaften des Ankers angepasste präzise Ventilschaltung erfolgen.

Es ist ferner ein erfindungsgemäßes Verfahren vorteilhaft, bei welchem zum Ermitteln des Umschaltzeitpunkts ein Endlageneinnahmezeitpunkt ermittelt wird, bei welchem der Anker eine Endlage einnimmt. Das Ermitteln des Endlageeinnahmezeitpunkts erfolgt vorzugsweise in Abhängigkeit des durch das Magnetventil fließenden Stroms. Der Umschaltzeitpunkt entspricht vorzugsweise dem Endlageneinnahmezeitpunkt oder hängt von dem Endlageneinnahmezeitpunkt ab. Beispielsweise prallt der Anker beim Endlageneinnahmezeitpunkt auf eine Anschlagsfläche des Magnetventils. In der Endlage des Ankers oder ab dem Aufprall des Ankers auf die Anschlagsfläche kann die Einschaltphase, in welcher der Einschaltstrom eingeprägt wird, beendet werden. Ferner kann in der Endlage des Ankers oder ab dem Aufprall des Ankers auf die Anschlagsfläche die Haltephase, in welcher der Haltestrom eingeprägt wird, gestartet werden.

In einer bevorzugten Ausführungsform des Verfahren erfolgt ein Bereitstellen von aufeinander abgestimmten pulsweitenmodulierten Spannungssignalen an Magnetventilen des landwirtschaftlichen Spritzgeräts, wobei den Magnetventilen über die bereitgestellten Spannungssignale jeweils ein Einschaltstrom zum Öffnen der Magnetventile eingeprägt wird und während des Einprägens der Einschaltströme an den jeweiligen Magnetventilen jeweils ein Stromhöchstwert auftritt. Dabei können die an den Magnetventilen bereitgestellten Spannungssignale derart aufeinander abgestimmt sein, dass die an den jeweiligen Magnetventilen auftretenden Stromhöchstwerte einen zeitlichen Einprägeversatz zueinander aufweisen. Insofern wird die Erkenntnis ausgenutzt, dass eine aufeinander abgestimmte Ansteuerung von Magnetventilen auch asynchron erfolgen kann, um eine vorgegebene Durchflussrate an Spritzflüssigkeit an den Magnetventilen einzustellen. Hierdurch wird die gleichzeitige Schaltung der Magnetventile vermieden, sodass der Öffnungsvorgang und der Schließvorgang der Magnetventile mit einem zeitlichen Versatz erfolgt. Beim Öffnen eines Magnetventils kommt es üblicherweise zu einem rampenartigen Anstieg des durch das Magnetventil fließenden Stroms und somit auch zu einem rampenartigen Anstieg der erforderlichen Leistung. Durch die zeitlich versetzte Ansteuerung der Magnetventile wird also ein temporär hoher Summenstrom und ein temporär hoher Leistungsbedarf in der Einschaltphase vermieden. Durch die sich überschneidende Ansteuerung der Magnetventile kann jedoch trotzdem eine hohe Gesamtausbringmenge an Spritzflüssigkeit eingestellt werden.

Die Signalabstimmung erfolgt vorzugsweise für eine Vielzahl von aufeinanderfolgenden Schaltzyklen der Magnetventile während der Ausbringung von Spritzflüssigkeit auf eine landwirtschaftliche Nutzfläche.

Über die pulsweitenmodulierten Spannungssignale wird die Ventilstellung der Magnetventile gesteuert. Die Magnetventile können in eine offene Ventilstellung und eine geschlossene Ventilstellung verbracht werden. Der Volumenstrom bzw. die Durchflussrate an Spritzflüssigkeit wird dabei über die Öffnungsdauer bzw. den duty-cycle der Magnetventile gesteuert. Die Magnetventile umfassen vorzugsweise jeweils eine Magnetspule, an welche eine Spannung anlegbar ist. Ferner umfassen die Magnetventile vorzugsweise einen Anker. Der Anker wird über die an der Magnetspule angelegte Spannung und den somit eingeprägten Strom bewegt.

In einer bevorzugten Ausführungsform des erfindungsgemäßen Verfahrens erfolgt das Einprägen der Einschaltströme in die Magnetventile während Einschaltphasen, wobei sich die Einschaltphasen an den Magnetventilen zeitlich überschneiden. Dadurch, dass sich Einschaltphasen an den Magnetventilen zeitlich überschneiden, überschneiden sich die Öffnungs- und Schließzyklen an den aufeinander abgestimmt angesteuerten Magnetventilen. Durch die asynchrone Ansteuerung befinden sich die Magnetventile zu einem Referenzzeitpunkt während der Öffnungsphase in unterschiedlichen Öffnungszuständen. Die Anker der Magnetventile bewegen sich zeitlich versetzt zueinander.

In einer weiteren bevorzugten Ausführungsform des erfindungsgemäßen Verfahrens erfolgt das Einprägen eines Einschaltstroms jeweils über einen Einschaltimpuls in einem der aufeinander abgestimmten pulsweitenmodulierten Spannungssignale, wobei die Einschaltimpulse der aufeinander abgestimmten Spannungssignale einen zeitlichen Impulsversatz zueinander aufweisen. Das Einprägen des Einschaltstroms kann dabei über nur einen Einschaltimpuls oder über mehrere Einschaltimpulse in einem der aufeinander abgestimmten pulsweitenmodulierten Spannungssignale erfolgen.

Über die Spannungssignale lässt sich die Einprägung des Einschaltstroms in der Einschaltphase präzise steuern.

Das erfindungsgemäße Verfahren wird ferner dadurch vorteilhaft weitergebildet, dass der zeitliche Einprägeversatz der Stromhöchstwerte und der zeitliche Impulsversatz der Einschaltimpulse übereinstimmen oder voneinander abhängig sind. Der zeitliche Einprägeversatz kann mit $\Delta t_{l,max}$ bezeichnet werden. Der zeitliche Impulsversatz kann mit $\Delta t_{lm}$ bezeichnet werden. In diesem Fall wird an den aufeinander abgestimmt angesteuerten Magnetventilen ein identisches Spannungsimpulsmuster angelegt, wobei die Spannungsimpulsmuster an den verschiedenen Magnetventilen zeitlich versetzt zueinander sind. Alternativ können an den aufeinander abgestimmt angesteuerten Magnetventilen voneinander abweichende Spannungsimpulsmuster angelegt werden, beispielsweise um Fertigungstoleranzen und damit verbundene Unterschiede im Hubweg der Anker der einzelnen Magnetventile zu berücksichtigen oder die Ausbringmenge anzupassen. Das Öffnungs- und Schließverhalten der einzelnen Magnetventile kann also grundsätzlich identisch sein oder voneinander abweichen. Auch wenn das Öffnungs- und Schließverhalten der Magnetventile identisch ist, weisen die Bewegungen der jeweiligen Anker einen zeitlichen Versatz zueinander auf.

Es ist außerdem ein erfindungsgemäßes Verfahren bevorzugt, bei welchem der zeitliche Einprägeversatz der Stromhöchstwerte und/oder der zeitliche Impulsversatz der Einschaltimpulse in einem Bereich zwischen 0,1 und 3 ms liegt. Vorzugsweise liegt der zeitliche Einprägeversatz der Stromhöchstwerte und/oder der zeitliche Impulsversatz der Einschaltimpulse in einem Bereich zwischen 0,25 und 2 ms. Der zeitliche Einprägeversatz der Stromhöchstwerte und/oder der zeitliche Impulsversatz der Einschaltimpulse kann beispielsweise 0,25 ms, 1 ms oder 2 ms betragen.

In einer weiteren bevorzugten Ausführungsform des erfindungsgemäßen Verfahrens weisen die aufeinander abgestimmten pulsweitenmodulierten Spannungssignale jeweils eine den Einschaltimpuls umfassende Ventilperiode auf. Die Dauer der Ventilperioden der aufeinander abgestimmten pulsweitenmodulierten Spannungssignale stimmt vorzugsweise zumindest temporär überein. Die Ventilperiode eines pulsweitenmodulierten Spannungssignals entspricht vorzugsweise der Zeitdauer zwischen dem Beginn eines eine Ventilöffnung verursachenden Einschaltimpulses und dem Beginn eines die drauffolgende Ventilöffnung verursachenden Einschaltimpulses. An den verschiedenen Magnetventilen liegen während des Einprägens des Einschaltstroms vorzugsweise identische Spannungsmuster an, wobei die identischen Spannungsmuster zeitversetzt an den verschiedenen Magnetventilen anliegen.

Es ist ferner ein erfindungsgemäßes Verfahren vorteilhaft, bei welchem die Spannungssignale derart aufeinander abgestimmt sind, dass der zeitliche Einprägeversatz der Stromhöchstwerte und/oder der zeitliche Impulsversatz der Einschaltimpulse dem Quotienten aus der Ventilperiode und der Anzahl der aufeinander abgestimmten Spannungssignale entspricht. Der zeitliche Einprägeversatz der Stromhöchstwerte und der zeitliche Impulsversatz der Einschaltimpulse ergeben sich folglich aus den folgenden Gleichungen:

$$\Delta t_{I,max} = T_p \, / \, n_{signale}$$

$$\Delta t_{Im} = T_p \, / \, n_{signale}$$

Hierbei ist $\Delta t_{I,max}$ der zeitliche Einprägeversatz der Stromhöchstwerte, $\Delta t_{Im}$ der zeitliche Impulsversatz der Einschaltimpulse, $T_p$ die Ventilperiode und $n_{signale}$ die Anzahl der aufeinander abgestimmten Spannungssignale.

Es ist außerdem ein erfindungsgemäßes Verfahren vorteilhaft, bei welchem geöffneten Ventilen über die bereitgestellten Spannungssignale jeweils ein Haltestrom zum Halten des jeweiligen Magnetventils in einem geöffneten Zustand eingeprägt wird. Durch die Einprägung des Einschaltstroms in ein Magnetventil wird eine Bewegung eines Ankers des Magnetventils von einer Sperrstellung in eine Freigabestellung verursacht. Über das Einprägen des Haltestroms wird der Anker des Magnetventils in der Freigabestellung gehalten. Der eingeprägte Haltestrom liegt vorzugsweise unterhalb des eingeprägten Einschaltstroms, da der Luftspalt, den die Feldlinien der Magnetspule des Magnetventils durchdringen müssen, in der Freigabestellung dünner ist als in der Sperrstellung des Ankers.

In einer weiteren bevorzugten Ausführungsform des erfindungsgemäßen Verfahrens erfolgt das Einprägen der Halteströme in die Magnetventile während Haltephasen, wobei sich die Haltephasen an den Magnetventilen zeitlich überschneiden. Aufgrund der asynchronen Einprägung des Einschaltstroms weisen die Haltestromeinprägungen an den Magnetventilen ebenfalls einen zeitlichen Versatz zueinander auf. Wenn nach der Einprägung des Haltestroms die Stromeinprägung unterbrochen wird, wird der Anker eines Magnetventils wieder zurück von der Freigabestellung in die Sperrstellung bewegt. Aufgrund der asynchronen Ansteuerung der Magnetventile sind auch die Schließzyklen der aufeinander abgestimmt angesteuerten Magnetventile zeitlich versetzt zueinander.

Es ist außerdem ein erfindungsgemäßes Verfahren bevorzugt, bei welchem das Einprägen des Haltestroms jeweils über mehrere Halteimpulse in einem der aufeinander abgestimmten pulsweitenmodulierten Spannungssignale erfolgt. Das Einprägen des Haltestroms kann alternativ auch über einen einzigen zeitlich gestreckten Halteimpuls erfolgen. Das Einprägen des Haltestroms kann unmittelbar auf das Einprägen des Einschaltstroms folgen. Ferner kann zwischen der Haltestromeinprägung und der Einschaltstromeinprägung eine Zeitspanne liegen, in welcher kein Strom eingeprägt wird. In dieser Zeitspanne kann der durch das Magnetventil fließende Strom rasch auf das Haltestromniveau abfallen.

Das erfindungsgemäße Verfahren wird ferner dadurch vorteilhaft weitergebildet, dass die Magnetventile, denen aufeinander abgestimmte pulsweitenmodulierte Spannungssignale bereitgestellt werden, eine Ventilgruppe bilden, wobei die Magnetventile einer Ventilgruppe durch eine Steuerungseinrichtung angesteuert werden. Eine Magnetventilgruppe, deren Magnetventilen aufeinander abgestimmte pulsweitenmodulierte Spannungssignale bereitgestellt werden, kann zwischen 2 und 10 Magnetventile umfassen. Beispielsweise umfasst eine Magnetventilgruppe, deren Magnetventilen aufeinander abgestimmte pulsweitenmodulierte Spannungssignale bereitgestellt werden, 4 oder 8 Magnetventile. Eine Ventilgruppe kann auch die einer schaltbaren Teilbreite zugeordneten Magnetventile umfassen. Ferner kann eine Ventilgruppe die einem spezifischen Gerätebereich zugeordneten Magnetventile umfassen. Im Rahmen des erfindungsgemäßen Verfahrens können auch mehrere Ventilgruppen angesteuert werden, wobei den jeweiligen Ventilgruppen jeweils eine Steuerungseinrichtung zugeordnet ist. In diesem Fall werden mehrere Ventilgruppen über mehrere Steuerungseinrichtungen angesteuert. Die Ansteuerung der verschiedenen Ventilgruppen kann unabhängig voneinander erfolgen oder aufeinander angepasst sein.

Die der Erfindung zugrundeliegende Aufgabe wird ferner durch ein Ventilsystem nach Anspruch 6 Art gelöst, wobei die Steuerungseinrichtung des erfindungsgemäßen Ventilsystems dazu eingerichtet ist, das Einprägen des Haltestroms in Abhängigkeit des durch das Magnetventil fließenden Stroms zu veranlassen. Insbesondere ist die Steuerungseinrichtung dazu eingerichtet, den Zeitpunkt, an welchem das Einprägen des Einschaltstroms beendet bzw. unterbrochen wird, in Abhängigkeit des durch das Magnetventil fließenden Stroms vorzugeben. Insbesondere ist die Steuerungseinrichtung dazu eingerichtet, den Zeitpunkt, an welchem das Einprägen des Haltestroms begonnen wird, in Abhängigkeit des durch das Magnetventil fließenden Stroms vorzugeben.

In dem erfindungsgemäßen Ventilsystem ist die Steuerungseinrichtung dazu eingerichtet, zu einem Umschaltzeitpunkt das Einprägen des Einschaltstroms in das Magnetventil zu unterbrechen und/oder das Einprägen des Haltestroms in das Magnetventil zu veranlassen. Vorzugsweise ist die Steuerungseinrichtung dazu eingerichtet, den Umschaltzeitpunkt in Abhängigkeit des durch das Magnetventil fließenden Stroms zu ermitteln.

In einer besonders bevorzugten Ausführungsform des erfindungsgemäßen Ventilsystems ist die Steuerungseinrichtung dazu eingerichtet, zum Ermitteln des Umschaltzeitpunkts den durch das Magnetventil fließenden Strom zu ermitteln. Hierzu kann die Steuerungseinrichtung beispielsweise eine Strommessung durchführen. Die Strommessung wird vorzugsweise in jedem Schaltzyklus des Magnetventils erneut durchgeführt. Alternativ kann der durch das Magnetventil fließende Strom auch durch die Steuerungseinrichtung berechnet werden. Insbesondere ist die Steuerungseinrichtung dazu eingerichtet, die zeitliche Entwicklung des durch das Magnetventil fließenden Stroms zu untersuchen. Hierzu weist die Steuerungseinrichtung vorzugsweise einen Speicher auf, auf welchem ermittelte Stromwerte abgespeichert werden. Die Steuerungseinrichtung kann eine Datenverarbeitungseinrichtung aufweisen, über welche die sich aus der zeitlichen Entwicklung des durch das Magnetventil fließenden Stroms ergebende Stromkurve ausgewertet werden kann.

Es ist ein Ventilsystem erfindungsgemäß, bei welchem die Steuerungseinrichtung dazu eingerichtet ist, zum Ermitteln des Umschaltzeitpunkts eine spezifische Änderung in der zeitlichen Entwicklung des durch das Magnetventil fließenden Stroms zu erfassen, währenddessen der Einschaltstrom in das Magnetventil eingeprägt wird. Hierzu kann die Steuerungseinrichtung dazu eingerichtet sein, in der zeitlichen Entwicklung des durch das Magnetventil fließenden Stroms einen Wendepunkt im Stromverlauf, eine spezifische Krümmung im Stromverlauf oder ein lokales Extremum, insbesondere ein Minimum oder ein Maximum, im Stromverlauf zu identifizieren. Es ist außerdem ein erfindungsgemäßes Ventilsystem bevorzugt, bei welchem die Steuerungseinrichtung dazu eingerichtet ist, zum Ermitteln des Umschaltzeitpunkts einen Endlageeinnahmezeitpunkt, bei welchem der Anker eine Endlage einnimmt, in Abhängigkeit des durch das Magnetventil fließenden Stroms zu erfassen. Die Steuerungseinrichtung ist vorzugsweise dazu eingerichtet, einen Aufprall des Ankers auf einer Anschlagsfläche auf Grundlage des durch das Magnetventil fließenden Stroms festzustellen. Beim Aufprall des Ankers auf der Anschlagsfläche nimmt der Anker vorzugsweise die Freigabestellung ein, in welcher das Magnetventil vollständig geöffnet ist.

Vorzugsweise weist das Ventilsystem mehrere Magnetventile auf, welche mittels des erfindungsgemäßen Verfahrens angesteuert werden. Die Magnetventile sind vorzugsweise mit einer oder mehreren Düsen verbunden, über welche die durch die Magnetventile strömende Flüssigkeit auf eine landwirtschaftliche Nutzfläche ausgebracht werden kann.

Das erfindungsgemäße Ventilsystem kann mehrere Magnetventile aufweisen. Die Steuerungseinrichtung kann dazu eingerichtet sein, aufeinander abgestimmte pulsweitenmodulierte Spannungssignale zu erzeugen und den Magnetventilen bereitzustellen. Vorzugsweise ist die Steuerungseinrichtung dazu eingerichtet, den Magnetventilen über die bereitgestellten Spannungssignale jeweils einen Einschaltstrom zum Öffnen der Magnetventile einzuprägen, sodass während des Einprägens der Einschaltströme an den jeweiligen Magnetventilen jeweils ein Stromhöchstwert auftritt. Insbesondere ist die Steuerungseinrichtung dazu eingerichtet, die den Magnetventilen bereitgestellten Spannungssignale derart aufeinander abzustimmen, dass die an den jeweiligen Magnetventilen auftretenden Stromhöchstwerte einen zeitlichen Einprägeversatz zueinander aufweisen. Das Ventilsystem kann ferner mehrere Steuerungseinrichtungen aufweisen, über welche mehrere Magnetventilgruppen angesteuert werden. Die Magnetventile sind vorzugsweise dazu eingerichtet, an einem Spritzgestänge eines landwirtschaftlichen Spritzgeräts und/oder im Nahbereich jeweils einer Spritzdüse angeordnet zu werden.

Das erfindungsgemäße Ventilsystem wird ferner dadurch vorteilhaft weitergebildet, dass die Steuerungseinrichtung dazu eingerichtet ist, die den Magnetventilen bereitgestellten Spannungssignale derart aufeinander abzustimmen, dass sich die Einschaltphasen an den Magnetventilen, in welchen das Einprägen der Einschaltströme in die Magnetventile erfolgt, zeitlich überschneiden. Somit erfolgt eine asynchrone Ansteuerung der Magnetventile, wobei sich die Öffnungs- und/oder Schließzyklen der aufeinander abgestimmt angesteuerten Magnetventile trotz der asynchronen Ansteuerung zeitlich überschneiden.

Es ist außerdem ein erfindungsgemäßes Ventilsystem vorteilhaft, welches dazu eingerichtet ist, das Verfahren nach einem der vorstehend beschriebenen Ausführungsform auszuführen. Hinsichtlich der Vorteile und Modifikationen des erfindungsgemäßen Ventilsystems wird insofern auf die Vorteile und Modifikationen des erfindungsgemäßen Verfahrens zum Ansteuern von Magnetventilen verwiesen.

Die der Erfindung zugrundeliegende Aufgabe wird ferner durch ein landwirtschaftliches Spritzgerät der eingangs genannten Art gelöst, wobei das Ventilsystem des erfindungsgemäßen landwirtschaftlichen Spritzgeräts nach einer der vorstehend beschriebenen Ausführungsformen ausgebildet ist. Hinsichtlich der Vorteile und Modifikationen des erfindungsgemäßen landwirtschaftlichen Spritzgeräts wird somit auf die Vorteile und Modifikationen des erfindungsgemäßen Ventilsystems und die Vorteile und Modifikationen des erfindungsgemäßen Verfahrens verwiesen.

Das landwirtschaftliche Spritzgerät kann beispielsweise eine Feldspritze mit einem sich in Querrichtung erstreckenden Spritzgestänge sein. Die Magnetventile und die mit den Magnetventilen verbundenen Spritzdüsen zum Ausbringen der Spritzflüssigkeit auf eine landwirtschaftliche Nutzfläche sind vorzugsweise an dem Spritzgestänge angeordnet.

Nachfolgend werden bevorzugte Ausführungsformen der Erfindung unter Bezugnahme auf die beiliegenden Zeichnungen näher erläutert und beschrieben. Dabei zeigen:

Fig. 1   einen Düsenkörper mit einem Magnetventil eines erfindungsgemäßen Ventilsystems in einer schematischen Schnittdarstellung, wobei sich der Anker in der Sperrstellung befindet;

Fig. 2    den in der Fig. 1 abgebildeten Düsenkörper samt Magnetventil in einer schematischen Schnittdarstellung, wobei sich der Anker in der Freigabestellung befindet;

Fig. 3    die zeitliche Entwicklung eines durch ein Magnetventil fließenden Stroms und die Position des Ankers des Magnetventils, wobei das Magnetventil mit einem aus dem Stand der Technik bekannten Verfahren angesteuert wird;

Fig. 4    die zeitliche Entwicklung eines durch ein Magnetventil fließenden Stroms und die Position des Ankers des Magnetventils, wobei das Magnetventil mit dem erfindungsgemäßen Verfahren angesteuert wird;

Fig. 5    die zeitliche Entwicklung einer an einem Magnetventil anliegenden Spannung und eines durch das Magnetventil fließenden Stroms sowie die Position des Ankers des Magnetventils, wobei das Magnetventil mit dem erfindungsgemäßen Verfahren angesteuert wird;

Fig. 6    die zeitliche Entwicklung einer an einem Magnetventil anliegenden Spannung und eines durch das Magnetventil fließenden Stroms sowie die Position des Ankers des Magnetventils, wobei das Magnetventil mit dem erfindungsgemäßen Verfahren angesteuert wird;

Fig. 7    die zeitliche Entwicklung von durch Magnetventile fließenden Strömen während der Ansteuerung der Magnetventile mittels des erfindungsgemäßen Verfahrens;

Fig. 8    die zeitliche Entwicklung von an Magnetventile anliegenden Spannungen während der Ansteuerung der Magnetventile mittels des erfindungsgemäßen Verfahrens; und

Fig. 9    die Position des Ankers von Magnetventilen während der Ansteuerung der Magnetventile mittels des erfindungsgemäßen Verfahrens.

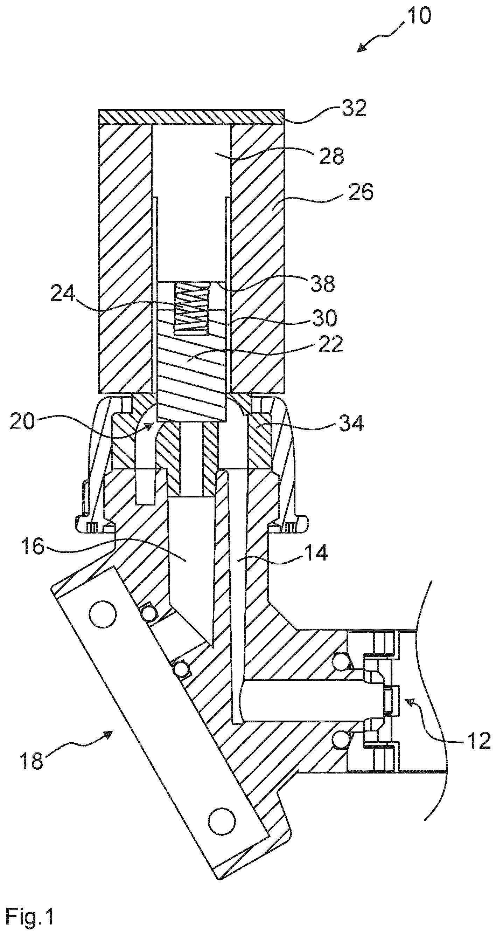

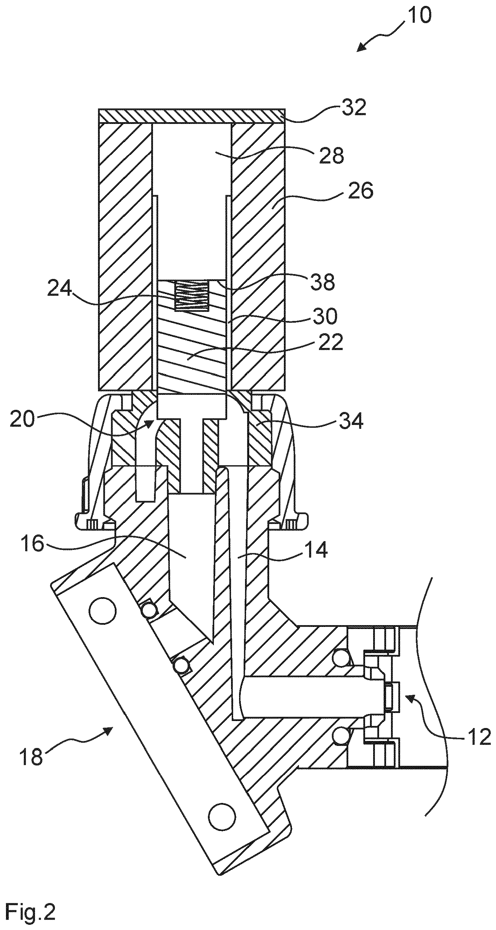

Die Fig. 1 und 2 zeigen ein Magnetventil 10 eines Ventilsystems eines landwirtschaftlichen Spritzgeräts.
Das Magnetventil 10 weist einen Einlassanschluss 12 auf, welcher mit einem Spritzgestänge des landwirtschaftlichen Spritzgeräts verbunden sein kann. Über den Einlassanschluss 12 kann Spritzflüssigkeit in das Magnetventil 10 einströmen. Wenn das Magnetventil 10 geöffnet ist, kann die über den Einlassanschluss 12 einströmende Spritzflüssigkeit über den Einlasskanal 14 und den Auslasskanal 16 zu dem Auslassanschluss 18 strömen. Der Auslassanschluss 18 kann beispielsweise mit einer Spritzdüse verbunden sein, über welche die Spritzflüssigkeit auf eine landwirtschaftliche Nutzfläche abgegeben werden kann. Zwischen dem Einlasskanal 14 und dem Auslasskanal 16 befindet sich ein Absperrbereich 20.
Bei dem in der Fig. 1 dargestellten Zustand des Magnetventils 10 befindet sich ein Anker 22 in einer Sperrstellung S. Der sich in der Sperrstellung S befindende Anker 22 ist innerhalb des Absperrbereichs 20 angeordnet und versperrt den Auslasskanal 16, sodass der Durchfluss der Spritzflüssigkeit durch das Magnetventil 10 gesperrt ist. In das Magnetventil 10 kann ein Einschaltstrom eingeprägt werden, wobei das Einprägen des Einschaltstroms eine Bewegung 44 des Ankers 22 von der Sperrstellung S in eine Freigabestellung F verursacht. Zum Einprägen des Einschaltstroms in das Magnetventil 10 wird eine Einschaltspannung an eine Magnetspule 26 des Magnetventils 10 angelegt. Wenn kein Strom in das Magnetventil 10 eingeprägt wird, drückt eine als Druckfeder ausgebildete Rückstellfeder 24 den Anker 22 in die Sperrstellung S. Das Magnetventil 10 weist ferner einen Gegenanker 28 auf, welcher in ein verschlossenes Ende des Rohres 30 eingepresst ist. Der festsitzende Gegenanker 28 verbessert den magnetischen Fluss der Magnetspule 26 im erregten Zustand. In einem oberen Endabschnitt weist das Magnetventil 10 eine Endkappe 32 auf, wobei zwischen der Endkappe 32 und der Magnetspule 26 eine Dichtung 36a angeordnet ist. Zwischen den unterschiedlichen Bestandteilen des Magnetventils sind weitere Dichtungen 36b-36e angeordnet. Der Einlasskanal 14 und der Auslasskanal 16 verlaufen abschnittsweise in dem Ventilteil 34, wobei sich der Absperrbereich 20 ebenfalls im Ventilteil 34 befindet.
Durch das Einprägen des Einschaltstroms bewegt sich der Anker 22 von der in der Fig. 1 dargestellten Sperrstellung S in die in der Fig. 2 dargestellten Freigabestellung F. Beim Einnehmen der Freigabestellung F schlägt der Anker 22 an der Anschlagsfläche 38 an. Bei der Freigabestellung F handelt es sich um eine Endlage des Ankers 22, bei welcher das Magnetventil 10 vollständig geöffnet ist, sodass der Durchfluss der Spritzflüssigkeit durch das Magnetventil 10 möglich ist.
Damit der Anker 22 für eine beabsichtigte Zeit in der Freigabestellung F gehalten wird, ist ein Haltestrom in das Magnetventil 10 einzuprägen. Die Einprägung des Haltestroms erfolgt über das Anlegen einer Haltespannung an die Magnetspule 26 des Magnetventils 10.
Damit die Einprägung des Einschaltstroms nicht unnötig fortgesetzt wird, nachdem der Anker 22 die Freigabestellung F eingenommen hat, ermittelt eine Steuerungseinrichtung des Ventilsystems einen Endlageeinnahmezeitpunkt, bei welchem der Anker 22 die Freigabestellung F eingenommen hat. Hierzu untersucht die Steuerungseinrichtung die zeitliche Entwicklung 40 des durch das Magnetventil 10 fließenden Stroms I. Das Einprägen des Haltestroms wird somit in Abhängigkeit des durch das Magnetventil 10 fließenden Stroms I veranlasst. Die Steuerungseinrichtung des Ventilsystems ist dazu eingerichtet, den Zeitpunkt, an welchem das Einprägen des Einschaltstroms zu unterbrechen ist, und den Zeitpunkt, an dem das Einprägen des Haltestroms zu starten ist, in Abhängigkeit des durch das Magnetventil 10 fließenden Stroms I zu bestimmen.

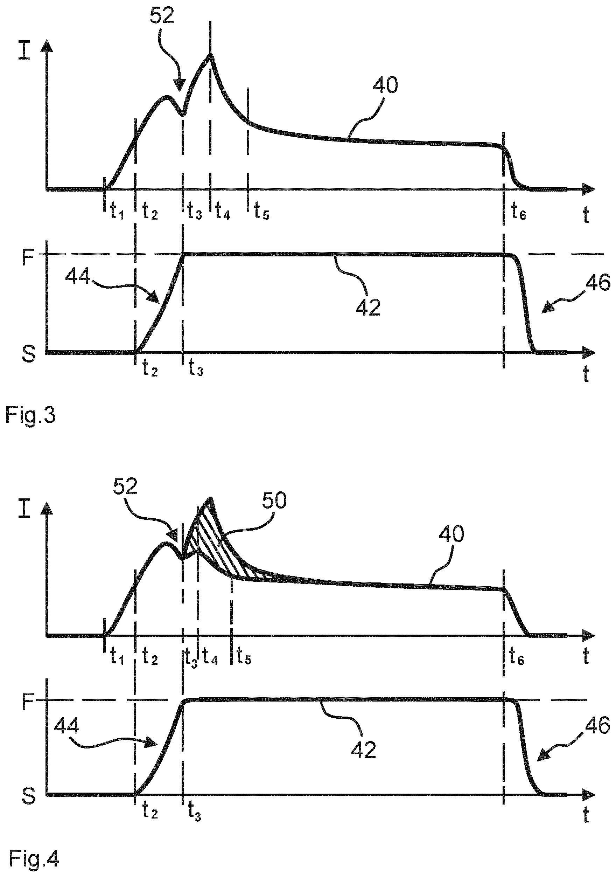

Die Fig. 3 und 4 zeigen die durch die Ansteuerung eines Magnetventils 10 umsetzbaren Vorteile, nämlich die Einsparung von Energie und die Reduzierung der auftretenden Stromhöchstwerte beim Schalten eines Magnetventils 10.

Die Fig. 3 zeigt die Entwicklung 40 des durch ein Magnetventil 10 fließenden Stroms I und die Ankerposition 42 des Magnetventils 10 über die Zeit t, wobei die Ansteuerung des Magnetventils 10 über ein aus dem Stand der Technik bekanntes Verfahren erfolgt. Hierbei wird zum Zeitpunkt $t_1$ das Einprägen eines Einschaltstroms in das Magnetventil 10 veranlasst. Zum Zeitpunkt $t_2$ bewegt sich der Anker 22 des Magnetventils 10 aus der Sperrstellung S hinaus. Die Bewegung 44 des Ankers 22 von der Sperrstellung S in eine Freigabestellung F ist zum Zeitpunkt $t_3$ abgeschlossen. Bei dem aus dem Stand der Technik bekannten Verfahren wird die Einprägung des Einschaltstroms in das Magnetventil 10 nunmehr fortgesetzt, da das Ansteuerungsverfahren die tatsächliche Position des Ankers 22 nicht berücksichtigt. Nach Ablauf einer vorgegebenen Zeit wird zum Zeitpunkt $t_4$ die Einprägung des Einschaltstroms in das Magnetventil 10 beendet und zum Zeitpunkt $t_5$ das Einprägen eines Haltestroms in das Magnetventil 10 zum Halten des Ankers 22 in der Freigabestellung F eingeprägt. Zum Zeitpunkt $t_6$ wird das Einprägen des Haltestroms beendet, sodass der Anker 22 die Bewegung 46 von der Freigabestellung F zurück in die Sperrstellung S ausführt.

Die Fig. 4 zeigt die Stromentwicklung 40 und die Ankerposition 42 über die Zeit t bei einem mit dem erfindungsgemäßen Verfahren angesteuerten Magnetventil 10. Hierzu ermittelt eine Steuerungseinrichtung den durch das Magnetventil 10 fließenden Strom I und untersucht die zeitliche Entwicklung 40 des durch das Magnetventil 10 fließenden Stroms I. Durch das Untersuchen der zeitlichen Entwicklung 40 des durch das Magnetventil 10 fließenden Stroms I kann der Ventilzustand, also die Position des Ankers 22, ermittelt werden. Hierzu erfasst die Steuerungseinrichtung eine spezifische Änderung 52 in der zeitlichen Entwicklung 40 des durch das Magnetventil 10 fließenden Stroms I, währenddessen der Einschaltstrom in das Magnetventil 10 eingeprägt wird. Die spezifische Änderung 52 in der zeitlichen Entwicklung 40 des durch das Magnetventil 10 fließenden Stroms I ist ein lokales Minimum im Stromverlauf. Die spezifische Änderung 52 kann alternativ auch ein Wendepunkt im Stromverlauf sein, beispielsweise vor oder hinter dem lokalen Minimum. Wenn die spezifische Änderung 52 in der zeitlichen Entwicklung 40 des durch das Magnetventil 10 fließenden Stroms I erfasst wird, prallt der Anker 22 auf eine Anschlagsfläche 38 des Magnetventils 10 und nimmt die Freigabestellung F ein. In dieser Endlage des Ankers 22 kann die Einschaltphase, in welcher der Einschaltstrom eingeprägt wird, beendet und die Haltephase, in welcher der Haltestrom eingeprägt wird, gestartet werden, sodass ein weiterer Stromanstieg vermieden wird. Durch die Vermeidung des unnötigen Stromanstiegs kann die schematisch gekennzeichnete Strommenge 50 eingespart werden.

Bei der dargestellten Ansteuerung des Magnetventils 10 werden die Umschaltzeitpunkte $t_4$, $t_5$, zu welchen das Einprägen des Einschaltstroms unterbrochen und das Einprägen des Haltestroms veranlasst wird, ausgehend von dem Erfassungszeitpunkt $t_3$ der spezifischen Änderung 52 in der zeitlichen Entwicklung 40 des durch das Magnetventil 10 fließenden Stroms berechnet.

Hierbei wird über eine Sicherheitszeitdauer das Einprägen des Einschaltstroms fortgesetzt, damit sichergestellt wird, dass das Magnetventil 10 tatsächlich vollständig geöffnet ist, bevor der niedrigere Haltestrom eingeprägt wird. Zum Umschaltzeitpunkt $t_4$ wird dann das Einprägen des Einschaltstroms unterbrochen. Nach einer Einprägepause, in welcher der durch das Magnetventil 10 fließende Strom I schnell abfallen kann, wird dann zum Zeitpunkt $t_5$ das Einprägen des Haltestroms veranlasst.

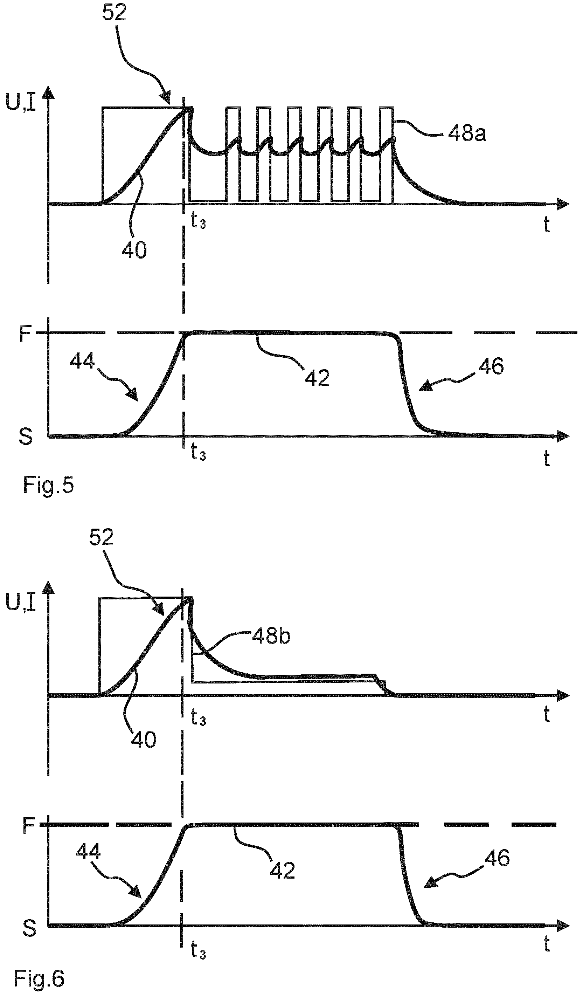

Die Fig. 5 und 6 zeigen die an einem Magnetventil 10 anliegende Spannung U über die Zeit t und die Entwicklung der Ankerposition des Ankers des jeweiligen Magnetventils 10 über die Zeit t.

Die Fig. 5 zeigt, dass zum Einprägen des Einschaltstroms in das Magnetventil 10 eine Einschaltspannung an die Magnetspule 26 des Magnetventils 10 angelegt wird. Zum Einprägen des Haltestroms in das Magnetventil 10 wird eine Haltespannung an die Magnetspule 26 des Magnetventils 10 angelegt. Die Spannungsentwicklung 48a über die Zeit t zeigt, dass die Einschaltspannung und die Haltespannung pulsweitenmoduliert sind.

Die in der Fig. 6 dargestellte Spannungsentwicklung 48b zeigt, dass die Einprägung des Einschaltstroms und des Haltestroms auch über das Anlegen einer nicht-modulierten Konstantspannung realisierbar ist.

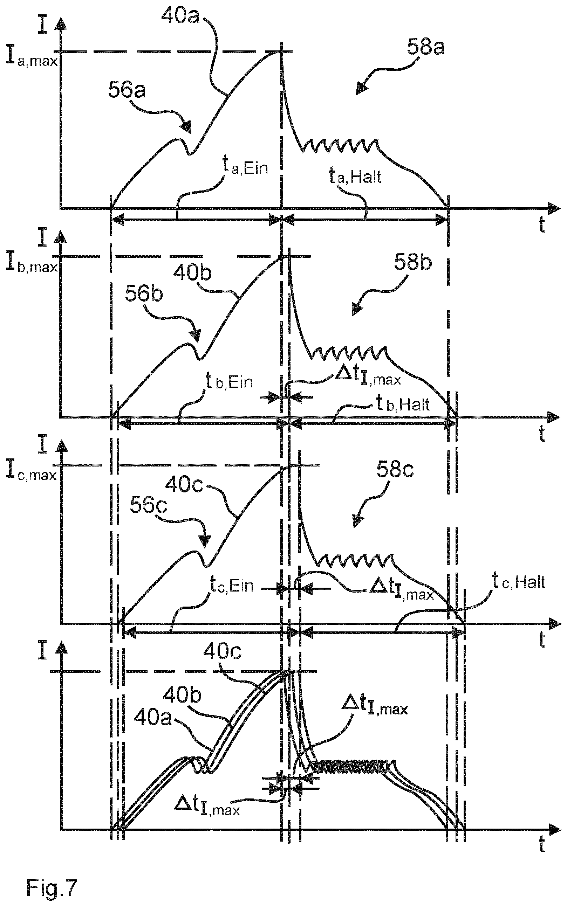

Die Fig. 7 zeigt zeitliche Entwicklungen 40a-40c von Strömen, welche durch verschiedene Magnetventile 10 fließen. Die Magnetventile 10 können konstruktiv beispielsweise wie das in den Fig. 1 und 2 dargestellte Magnetventil 10 ausgebildet sein.

In der Darstellung werden Stromverläufe 40a-40c über die Zeit t von drei verschiedenen Magnetventilen 10 wiedergegeben, wobei die Magnetventile 10 Bestandteile eines Ventilsystems eines landwirtschaftlichen Spritzgeräts sind und von einer Steuerungseinrichtung angesteuert werden. Über die Steuerungseinrichtung werden den Magnetventilen 10 zunächst Einschaltströme 56a-56c zum Öffnen der Magnetventile 10 eingeprägt. Dabei wird einem ersten Magnetventil 10 der Einschaltstrom 56a eingeprägt. Einem zweiten Magnetventil 10 wird der Einschaltstrom 56b eingeprägt. Einem dritten Magnetventil 10 wird der Einschaltstrom 56c eingeprägt. Das unterste Diagramm der Fig. 7 zeigt die zeitlichen Stromverläufe 40a-40c an den verschiedenen Magnetventilen 10 im direkten Vergleich.

Das Einprägen der Einschaltströme 56a-56c in die Magnetventile 10 erfolgt während Einschaltphasen $t_{a,Ein}$-$t_{c,Ein}$. Die Einschaltphasen $t_{a,Ein}$-$t_{c,Ein}$ der verschiedenen Magnetventile 10 überschneiden sich zeitlich. Während der Einschaltphasen $t_{a,Ein}$-$t_{c,Ein}$ werden Anker 22 der Magnetventile 10 von einer Sperrstellung S in eine Freigabestellung F bewegt. Durch das Bewegen der Anker 22 der Magnetventile 10 von der Sperrstellung S in die Freigabestellung F werden die Magnetventile 10 geöffnet. Nachdem die Magnetventile 10 geöffnet wurden, wird den Magnetventilen 10 jeweils ein Haltestrom 58a-58c eingeprägt, mittels welchem die jeweiligen Magnetventile 10 in dem geöffneten Zustand gehalten werden. Nachdem der Anker 22 über den Einschaltstrom 56a-56c in die Freigabestellung verbracht wurde, wird der Anker 22 nunmehr mittels des Haltestroms in der Freigabestellung F gehalten. Der Haltestrom 56a-56c eines Magnetventils 10 liegt üblicherweise unterhalb des Einschaltstroms 56a-56c, da der Luftspalt, den die Feldlinien der Magnetspule 26 durchdringen müssen, in der Freigabestellung F dünner ist als in der Sperrstellung S. Das Einprägen der Halteströme 58a-58c erfolgt während Haltephasen $t_{a,Halt}$-$t_{c,Halt}$. Die Haltephasen $t_{a,Halt}$-$t_{c,Halt}$ an den Magnetventilen 10 überschneiden sich zeitlich.

Während des Einprägens der Einschaltströme 56a-56c tritt an den jeweiligen Magnetventilen 10 jeweils ein Stromhöchstwert $I_{a,max}$-$I_{c,max}$ auf. Die verschiedenen Magnetventile werden dabei von der Steuerungseinrichtung derart angesteuert, dass die an den jeweiligen Magnetventilen 10 auftretenden Stromhöchstwerte $I_{a,max}$-$I_{c,max}$ einen zeitlichen Einprägeversatz $\Delta t_{I,max}$ zueinander aufweisen.

Über die beschriebene Ansteuerung der verschiedenen Magnetventile 10 kann eine vorgegebene Durchflussrate an Spritzflüssigkeit an den Magnetventilen 10 eingestellt werden, ohne dass die Magnetventile 10 dabei synchron geschaltet werden müssen. Es erfolgt folglich ein asynchrones Öffnen und Schließen der verschiedenen Magnetventile 10. Durch die zeitlich versetzte Ansteuerung der verschiedenen Magnetventile wird die Höhe des Summenstroms und der Gesamtleistungsbedarf in der Einschaltphase $t_{a,Ein}$-$t_{c,Ein}$ erheblich reduziert. Trotz der versetzten Schaltung der Magnetventile 10 sind diese zeitweise gleichzeitig geöffnet.

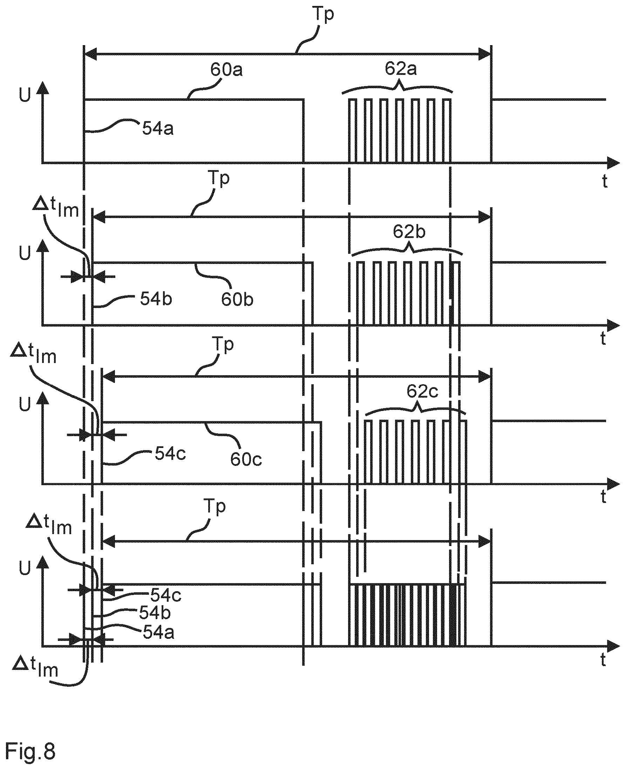

Die Fig. 8 zeigt die zeitliche Entwicklung von pulsweitenmodulierten Spannungssignalen 54a-54c. Das Spannungssignal 54a wird dabei einem ersten Magnetventil 10 bereitgestellt. Das Spannungssignal 54b wird einem zweiten Magnetventil 10 bereitgestellt. Das Spannungssignal 54c wird einem dritten Magnetventil 10 bereitgestellt. Das unterste Diagramm der Fig. 8 zeigt die pulsweitenmodulierten Spannungssignale 54a-54c im direkten Vergleich.

Über die Spannungssignale 54a-54c können Magnetventilen 10 beispielsweise die in der Fig. 7 dargestellten Einschaltströme 56a-56c sowie die in der Fig. 7 dargestellten Halteströme 58a-58c eingeprägt werden. Das Einprägen der Einschaltströme 56a-56c erfolgt dabei jeweils über einen Einschaltimpuls 60a-60c in dem jeweiligen Spannungssignal 54a-54c. Das Einprägen der Halteströme 58a-58c erfolgt jeweils über mehrere Halteimpulse 62a-62c des jeweiligen Spannungssignals 54a-54c.

Die Einschaltimpulse 60a-60c der Spannungssignale 54a-54c weisen einen zeitlichen Impulsversatz $\Delta t_{Im}$ zueinander auf. Der zeitliche Einprägeversatz $\Delta t_{I,max}$ (vgl. Fig. 7) und der zeitliche Impulsversatz $\Delta t_{Im}$ der Einschaltimpulse 60a-60c kann übereinstimmen. In alternativen Ausführungsformen können der zeitliche Einprägeversatz $\Delta t_{I,max}$ und der zeitliche Impulsversatz $\Delta t_{Im}$ der Einschaltimpulse 60a-60c voneinander abweichen und/oder voneinander abhängig sein. Der zeitliche Einprägeversatz $\Delta t_{I,max}$ der Stromhöchstwerte $I_{a,max}$-$I_{c,max}$ und der zeitliche Impulsversatz $\Delta t_{Im}$ der Einschaltimpulse 60a-60c können beispielsweise in einem Bereich zwischen 0,1 und 3 ms, insbesondere in einem Bereich zwischen 0,25 und 2 ms liegen.

Die aufeinander abgestimmten pulsweitenmodulierten Spannungssignale 54a-54c weisen jeweils eine den Einschaltimpuls 60a-60c umfassende Ventilperiode $T_p$ auf.

Die Ventilperioden $T_p$ der aufeinander abgestimmten pulsweitenmodulierten Spannungssignale 54a-54c stimmen vorliegend hinsichtlich ihrer Zeitdauer überein. Die Ventilperiode $T_p$ entspricht der Zeitdauer zwischen dem Beginn des die Ventilöffnung verursachenden Einschaltimpulses 60a-60c und dem Beginn eines die drauffolgende Ventilöffnung verursachenden Einschaltimpulses. Wie sich aus der Darstellung ergibt, liegen an den verschiedenen Magnetventilen 10 während des Einprägens der Einschaltströme 56a-56c identische Spannungsmuster an, welche jedoch zeitlich versetzt zueinander sind.

Die Spannungssignale 54a-54c können, anders als in der Fig. 8 dargestellt, auch derart aufeinander abgestimmt sein, dass der zeitliche Einprägeversatz $\Delta t_{I,max}$ der Stromhöchstwerte $I_{a,max}$-$I_{c,max}$ und der zeitliche Impulsversatz $\Delta t_{Im}$ der Einschaltimpulse 60a-60c dem Quotienten aus der Ventilperiode $T_p$ und der Anzahl der aufeinander abgestimmten Spannungssignale 54a-54c entspricht.

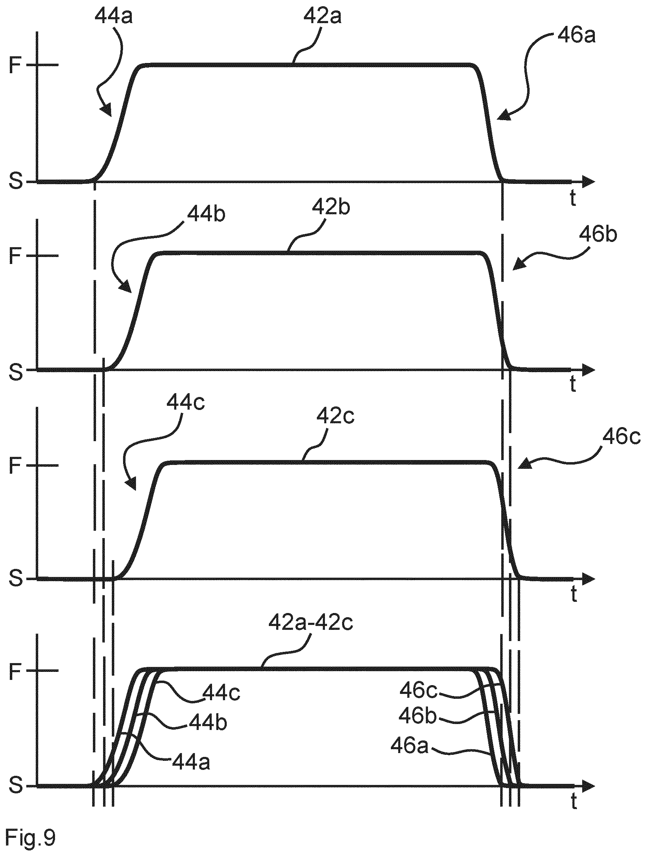

Die Fig. 9 zeigt Ankerpositionen 42a-42c verschiedener Magnetventile 10, welche mit aufeinander abgestimmten Spannungssignalen 54a-54c angesteuert werden. Im Rahmen der Ansteuerung können den verschiedenen Magnetventilen 10 beispielsweise die in der Fig. 8 dargestellten aufeinander abgestimmten pulsweitenmodulierten Spannungssignale 54a-54c bereitgestellt werden.

Der Verlauf 42a bezieht sich auf die Ankerposition eines ersten Magnetventils 10. Der Verlauf 42b bezieht sich auf die Ankerposition eines zweiten Magnetventils 10. Der Verlauf 42c bezieht sich auf die Ankerposition eines dritten Magnetventils 10. Das unterste Diagramm zeigt die Ankerpositionen der verschiedenen Magnetventile 10 im direkten Vergleich. Aufgrund der asynchronen Ansteuerung der Magnetventile 10 sind die Ankerbewegungen 44a-44c von der Sperrstellung S in die Freigabestellung F zeitlich versetzt zueinander. Ferner sind die Ankerbewegungen 46a-46c von der Freigabestellung F in die Sperrstellung S zeitlich versetzt zueinander.

Die Ankerbewegungen der Magnetventile 10 sind also grundsätzlich identisch, weisen jedoch einen zeitlichen Versatz zueinander auf. Der zeitliche Versatz der Ankerbewegungen entspricht vorzugsweise dem Einprägeversatz $\Delta t_{I,max}$ der Stromhöchstwerte $I_{a,max}$-$I_{c,max}$ und/oder dem zeitlichen Impulsversatz $\Delta t_{Im}$ der Einschaltimpulse 60a-60c.

## Bezugszeichenliste

| 10 | Magnetventil |
|---|---|
| 12 | Einlassanschluss |
| 14 | Einlasskanal |
| 16 | Auslasskanal |
| 18 | Auslassanschluss |
| 20 | Absperrbereich |
| 22 | Anker |
| 24 | Rückstellfeder |
| 26 | Magnetspule |
| 28 | Gegenanker |
| 30 | Rohr |
| 32 | Endkappe |
| 34 | Ventilteil |
| 36a-36e | Dichtungen |
| 38 | Anschlagsfläche |
| 40, 40a-40c | Stromentwicklungen |
| 42, 42a-42c | Ankerpositionen |
| 44, 44a-44c | Ankerbewegungen |
| 46, 46a-46c | Ankerbewegungen |
| 48a, 48b | Spannungsentwicklungen |
| 50 | Strommenge |
| 52 | Änderung |
| 54a-54c | Spannungssignale |
| 56a-56c | Einschaltströme |
| 58a-58c | Halteströme |
| 60a-60c | Einschaltimpulse |
| 62a-62c | Halteimpulse |

| F | Freigabestellung |
|---|---|
| I | Strom |
| $I_{a,max}$-$I_{c,max}$ | Stromhöchstwerte |
| S | Sperrstellung |
| U | Spannung |
| t | Zeit |
| $t_{a,Ein}$-$t_{c,Ein}$ | Einschaltphasen |
| $t_{a,Halt}$-$t_{c,Halt}$ | Haltephasen |
| $t_1$-$t_6$ | Zeitpunkte |

| $T_p$ | Ventilperiode $\Delta t_{I,max}$ Einprägeversatz |
|---|---|
| $\Delta t_{Im}$ | Impulsversatz |

## Patentansprüche

1. Verfahren zum Ansteuern eines Magnetventils (10) eines landwirtschaftlichen Spritzgeräts, mit den Schritten:

   - Einprägen eines Einschaltstroms in ein Magnetventil (10) des landwirtschaftlichen Spritzgeräts zum Veranlassen einer Bewegung (44) eines Ankers (22) von einer Sperrstellung (S) in eine Freigabestellung (F); und
   - Einprägen eines Haltestroms in das Magnetventil (10) zum Halten des Ankers (22) in der Freigabestellung (F); wobei
   das Einprägen des Haltestroms in Abhängigkeit des durch das Magnetventil (10) fließenden Stroms (I) veranlasst wird,
   **gekennzeichnet durch** den Schritt:

   - Ermitteln eines Umschaltzeitpunkts ($t_4$, $t_5$), zu welchem das Einprägen des Einschaltstroms unterbrochen und/oder das Einprägen des Haltestroms veranlasst wird, wobei das Ermitteln des Umschaltzeitpunkts ($t_4$, $t_5$) in Abhängigkeit des durch das Magnetventil (10) fließenden Stroms (I) erfolgt,

   wobei zum Ermitteln des Umschaltzeitpunkts ($t_4$, $t_5$) der folgende Schritt ausgeführt wird:

   - Erfassen einer spezifischen Änderung (52) in der zeitlichen Entwicklung (40) des durch das Magnetventil (10) fließenden Stroms (I), währenddessen der Einschaltstrom in das Magnetventil (10) eingeprägt wird.

2. Verfahren nach Anspruch 1,
   **dadurch gekennzeichnet, dass**

   - zum Einprägen des Einschaltstroms in das Magnetventil (10) eine Einschaltspannung an eine Magnetspule (26) des Magnetventils (10) angelegt wird; und/oder
   - zum Einprägen des Haltestroms in das Magnetventil (10) eine Haltespannung an die Magnetspule (26) des Magnetventils (10) angelegt wird.

3. Verfahren nach Anspruch 1 oder 2,
   **dadurch gekennzeichnet, dass** zum Ermitteln des Umschaltzeitpunkts ($t_4$, $t_5$) zumindest einer der folgenden Schritte ausgeführt wird:

   - Ermitteln des durch das Magnetventil (10) fließenden Stroms (I);
- Untersuchen der zeitlichen Entwicklung (40) des durch das Magnetventil (10) fließenden Stroms (I).

4. Verfahren nach einem der vorstehenden Ansprüche, **dadurch gekennzeichnet, dass** der Umschaltzeitpunkt ($t_4$, $t_5$) dem Erfassungszeitpunkt der spezifischen Änderung (52) in der zeitlichen Entwicklung (40) des durch das Magnetventil (10) fließenden Stroms (I) entspricht oder ausgehend von dem Erfassungszeitpunkt der spezifischen Änderung (52) in der zeitlichen Entwicklung (40) des durch das Magnetventil (10) fließenden Stroms (I) berechnet wird.

5. Verfahren nach einem der vorstehenden Ansprüche, **dadurch gekennzeichnet, dass** zum Ermitteln des Umschaltzeitpunkts ($t_4$, $t_5$) der folgende Schritt ausgeführt wird:

   - Ermitteln eines Endlageneinnahmezeitpunkts ($t_3$), bei welchem der Anker (22) eine Endlage einnimmt, in Abhängigkeit des durch das Magnetventil (10) fließenden Stroms (I).

6. Ventilsystem für ein landwirtschaftliches Spritzgerät, mit

   - zumindest einem Magnetventil (10), und
   - einer Steuerungseinrichtung, welche dazu eingerichtet ist, zum Veranlassen einer Bewegung (44) eines Ankers (22) des Magnetventils (10) von einer Sperrstellung (S) in eine Freigabestellung (F) einen Einschaltstrom in das Magnetventil (10) einzuprägen und zum Halten des Ankers (22) in der Freigabestellung (F) einen Haltestrom in das Magnetventil (10) einzuprägen; wobei

   die Steuerungseinrichtung dazu eingerichtet ist, das Einprägen des Haltestroms in Abhängigkeit des durch das Magnetventil (10) fließenden Stroms (I) zu veranlassen, **dadurch gekennzeichnet, dass** die Steuerungseinrichtung dazu eingerichtet ist, zu einem Umschaltzeitpunkt ($t_4$, $t_5$) das Einprägen des Einschaltstroms in das Magnetventil (10) zu unterbrechen und/oder das Einprägen des Haltestroms in das Magnetventil (10) zu veranlassen, wobei die Steuerungseinrichtung vorzugsweise dazu eingerichtet ist, den Umschaltzeitpunkt ($t_4$, $t_5$) in Abhängigkeit des durch das Magnetventil (10) fließenden Stroms (I) zu ermitteln und die Steuerungseinrichtung dazu eingerichtet ist, zum Ermitteln des Umschaltzeitpunkts ($t_4$, $t_5$) eine spezifische Änderung (52) in der zeitlichen Entwicklung (40) des durch das Magnetventil (10) fließenden Stroms (I) zu erfassen, währenddessen der Einschaltstrom in das Magnetventil (10) eingeprägt wird.

7. Ventilsystem nach Anspruch 6, **dadurch gekennzeichnet, dass** die Steuerungseinrichtung dazu eingerichtet ist, zum Ermitteln des Umschaltzeitpunkts ($t_4$, $t_5$) den durch das Magnetventil (10) fließenden Strom (I) zu ermitteln und/oder die zeitliche Entwicklung (40) des durch das Magnetventil (10) fließenden Stroms (I) zu untersuchen.

8. Ventilsystem nach einem der Ansprüche 6 oder 7, **dadurch gekennzeichnet, dass** die Steuerungseinrichtung dazu eingerichtet ist, zum Ermitteln des Umschaltzeitpunkts ($t_4$, $t_5$) einen Endlageneinnahmezeitpunkt ($t_3$), bei welchem der Anker (22) eine Endlage einnimmt, in Abhängigkeit des durch das Magnetventil (10) fließenden Stroms (I) zu erfassen.

9. Ventilsystem nach einem der Ansprüche 6 bis 8, **dadurch gekennzeichnet, dass** das Ventilsystem dazu eingerichtet ist, dass Verfahren zum Ansteuern eines Magnetventils (10) nach einem der Ansprüche 1 bis 7 auszuführen.

10. Landwirtschaftliches Spritzgerät, insbesondere Feldspritze, mit

    - einem Ventilsystem, mittels welchem eine Durchflussmenge an Spritzflüssigkeit einstellbar ist;

    **dadurch gekennzeichnet, dass** das Ventilsystem nach einem der Ansprüche 6 bis 9 ausgebildet ist.

**Claims**

1. Method for controlling a solenoid valve (10) of an agricultural sprayer apparatus, the method comprising the steps of:

   - impressing an inrush current into a solenoid valve (10) of the agricultural sprayer apparatus in order to initiate a movement (44) of an armature (22) from a blocking position (S) into a release position (F); and
   - impressing a holding current into the solenoid valve (10) in order to hold the armature (22) in the release position (F);
   the impression of the holding current being initiated depending on the current (I) flowing through the solenoid valve (10),
   **characterized by** the step of:

      - determining a switching time ($t_4$, ts), at which the impression of the inrush current is interrupted and/or the impression of the holding current is initiated, the switching time ($t_4$, $t_5$) being determined depending on the current (I) flowing through the solenoid valve (10),

in order to determine the switching time ($t_4$, $t_5$) the following step being carried out:

- detecting a specific change (52) in the temporal development (40) of the current (I) flowing through the solenoid valve (10), during which the inrush current is impressed into the solenoid valve (10).

2. Method according to claim 1, **characterized in that**

- in order to impress the inrush current into the solenoid valve (10), an activation voltage is applied to a solenoid coil (26) of the solenoid valve (10); and/or
- in order to impress the holding current into the solenoid valve (10), a holding voltage is applied to the solenoid coil (26) of the solenoid valve (10).

3. Method according to either claim 1 or claim 2, **characterized in that** in order to determine the switching time ($t_4$, $t_5$) at least one of the following steps is carried out:

- determining the current (I) flowing through the solenoid valve (10);
- investigating the temporal development (40) of the current (I) flowing through the solenoid valve (10).

4. Method according to any of the preceding claims, **characterized in that** the switching time ($t_4$, $t_5$) corresponds to the detection time of the specific change (52) in the temporal development (40) of the current (I) flowing through the solenoid valve (10) or is calculated on the basis of the detection time of the specific change (52) in the temporal development (40) of the current (I) flowing through the solenoid valve (10).

5. Method according to any of the preceding claims, **characterized in that** in order to determine the switching time ($t_4$, $t_5$) the following step is carried out:

- determining an end position assumption time ($t_3$), at which the armature (22) assumes an end position, depending on the current (I) flowing through the solenoid valve (10).

6. Valve system for an agricultural sprayer apparatus, comprising

- at least one solenoid valve (10), and
- a control device which is designed to impress an inrush current into the solenoid valve (10) in order to initiate a movement (44) of an armature (22) of the solenoid valve (10) from a blocking position (S) into a release position (F) and to impress a holding current into the solenoid valve (10) in order to hold the armature (22) in the release position (F);

the control device being designed to initiate the impression of the holding current depending on the current (I) flowing through the solenoid valve (10), **characterized in that** the control device is designed to interrupt the impression of the inrush current into the solenoid valve (10) at a switching time ($t_4$, $t_5$) and/or to initiate the impression of the holding current into the solenoid valve (10), the control device being preferably designed to determine the switching time ($t_4$, $t_5$) depending on the current (I) flowing through the solenoid valve (10) and the control device being designed, in order to determine the switching time ($t_4$, ts), to detect a specific change (52) in the temporal development (40) of the current (I) flowing through the solenoid valve (10), during which the inrush current is impressed into the solenoid valve (10).

7. Valve system according to claim 6, **characterized in that** the control device is designed to determine the current (I) flowing through the solenoid valve (10) in order to determine the switching time ($t_4$, $t_5$) and/or to investigate the temporal development (40) of the current (I) flowing through the solenoid valve (10).

8. Valve system according to either claim 6 or claim 7, **characterized in that** the control device is designed to detect an end position assumption time ($t_3$), at which the armature (22) assumes an end position, depending on the current (I) flowing through the solenoid valve (10), in order to determine the switching time ($t_4$, $t_5$).

9. Valve system according to any of claims 6 to 8, **characterized in that** the valve system is designed to carry out the method for controlling a solenoid valve (10) according to any of claims 1 to 7.

10. Agricultural sprayer apparatus, in particular a field sprayer, comprising

- a valve system by means of which a flow rate of spray liquid can be adjusted;

**characterized in that** the valve system is designed according to any of claims 6 to 9.

## Revendications

1. Procédé permettant de commander une électrovanne (10) d'un appareil de pulvérisation agricole, comportant les étapes consistant à :

   - appliquer un courant d'activation à une électrovanne (10) de l'appareil de pulvérisation agricole pour la provocation d'un déplacement (44) d'un induit (22) d'une position de blocage (S) à une position de libération (F) ; et
   - appliquer un courant de maintien dans l'électrovanne (10) pour le maintien de l'induit (22) dans la position de libération (F) ; dans lequel l'application du courant de maintien est provoquée en fonction du courant (I) circulant à travers l'électrovanne (10),
   **caractérisé par** l'étape consistant à :

   - déterminer un instant de commutation ($t_4$, $t_5$) auquel l'application du courant d'activation est interrompue et/ou l'application du courant de maintien est provoquée, dans lequel la détermination de l'instant de commutation ($t_4$, $t_5$) s'effectue en fonction du courant (I) circulant à travers l'électrovanne (10),

   dans lequel l'étape suivante est exécutée pour la détermination de l'instant de commutation ($t_4$, $t_5$) :

   - détection d'un changement spécifique (52) dans l'évolution temporelle (40) du courant (I) circulant à travers l'électrovanne (10) pendant que le courant d'activation est appliqué dans l'électrovanne (10).

2. Procédé selon la revendication 1,
   **caractérisé en ce**

   - **qu'**une tension d'activation est imprimée sur une bobine magnétique (26) de l'électrovanne (10) pour l'application du courant d'activation dans l'électrovanne (10) ; et/ou
   - **qu'**une tension de maintien est imprimée sur la bobine magnétique (26) de l'électrovanne (10) pour l'application du courant de maintien dans l'électrovanne (10).

3. Procédé selon la revendication 1 ou 2,
   **caractérisé en ce que,** pour la détermination de l'instant de commutation ($t_4$, ts), au moins l'une des étapes suivantes est exécutée :

   - détermination du courant (I) circulant à travers l'électrovanne (10) ;
   - examen de l'évolution temporelle (40) du courant (I) circulant à travers l'électrovanne (10).

4. Procédé selon l'une des revendications précédentes,
   **caractérisé en ce que** l'instant de commutation ($t_4$, $t_5$) correspond à l'instant de détection du changement spécifique (52) dans l'évolution temporelle (40) du courant (I) circulant à travers l'électrovanne (10) ou est calculé à partir de l'instant de détection du changement spécifique (52) dans l'évolution temporelle (40) du courant (I) circulant à travers l'électrovanne (10).

5. Procédé selon l'une des revendications précédentes,
   **caractérisé en ce que,** pour la détermination de l'instant de commutation ($t_4$, ts), l'étape suivante est exécutée :

   - détermination d'un instant de prise de position finale ($t_3$) auquel l'induit (22) prend une position finale, en fonction du courant (I) circulant à travers l'électrovanne (10).

6. Système de vannes pour un pulvérisateur agricole, comportant

   - au moins une électrovanne (10), et
   - un dispositif de commande qui est conçu pour appliquer un courant d'activation dans l'électrovanne (10) pour la provocation d'un déplacement (44) d'un induit (22) de l'électrovanne (10) d'une position de blocage (S) à une position de libération (F) et pour appliquer un courant de maintien dans l'électrovanne (10) pour le maintien de l'induit (22) dans la position de libération (F) ; dans lequel

   le dispositif de commande est conçu pour provoquer l'application du courant de maintien en fonction du courant (**I**) circulant à travers l'électrovanne (10),
   **caractérisé en ce que** le dispositif de commande est conçu pour interrompre l'application du courant d'activation dans l'électrovanne (10) à un instant de commutation ($t_4$, $t_5$) et/ou pour provoquer l'application du courant de maintien dans l'électrovanne (10), dans lequel le dispositif de commande est de préférence conçu pour déterminer l'instant de commutation ($t_4$, $t_5$) en fonction du courant (I) circulant à travers l'électrovanne (10) et le dispositif de commande est conçu pour détecter, pour la détermination de l'instant de commutation ($t_4$, ts), un changement spécifique (52) dans l'évolution temporelle (40) du courant (I) circulant à travers l'électrovanne (10), pendant lequel le courant d'activation est appliqué dans l'électrovanne (10).

7. Système de vannes selon la revendication 6,
**caractérisé en ce que** le dispositif de commande est conçu pour déterminer le courant (I) circulant à travers l'électrovanne (10) pour la détermination de l'instant de commutation ($t_4$, $t_5$) et/ou pour examiner l'évolution temporelle (40) du courant (I) circulant à travers l'électrovanne (10).

8. Système de vannes selon l'une des revendications 6 ou 7,
**caractérisé en ce que** le dispositif de commande est conçu pour détecter, pour la détermination de l'instant de commutation ($t_4$, ts), un instant de prise de position finale ($t_3$), auquel l'induit (22) prend une position finale, en fonction du courant (I) circulant à travers l'électrovanne (10).

9. Système de vannes selon l'une des revendications 6 à 8,
**caractérisé en ce que** le système de vannes est conçu pour exécuter le procédé permettant la commande d'une électrovanne (10) selon l'une des revendications 1 à 7.

10. Appareil de pulvérisation agricole, en particulier pulvérisateur agricole, comportant

   - un système de vannes permettant de régler un débit de liquide de pulvérisation ;

   **caractérisée en ce que** le système de vannes est réalisé selon l'une des revendications 6 à 9.

Fig.1

Fig.2

Fig.3

Fig.4

Fig.5

Fig.6

Fig.7

Fig.8

Fig.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20190321844 A1
- US 20120228395 A1

- US 20110183277 A1